Europäisches Patentamt

European Patent Office

Office européen des brevets

(19)

(11) Veröffentlichungsnummer: **0 096 803**
**B1**

(12) **EUROPÄISCHE PATENTSCHRIFT**

(45) Veröffentlichungstag der Patentschrift: **25.04.90**

(21) Anmeldenummer: **83105409.3**

(22) Anmeldetag: **01.06.83**

(51) Int. Cl.⁵: **B 60 N 2/12**

(54) **Sitzschiene.**

(30) Priorität: **11.06.82 DE 3221959**

(43) Veröffentlichungstag der Anmeldung:
**28.12.83 Patentblatt 83/52**

(45) Bekanntmachung des Hinweises auf die
Patenterteilung:
**25.04.90 Patentblatt 90/17**

(84) Benannte Vertragsstaaten:
**FR GB IT**

(56) Entgegenhaltungen:
**FR-A-2 262 610**
**GB-A- 433 044**
**US-A-4 331 313**

(73) Patentinhaber: **KEIPER RECARO GmbH & Co.**
**Büchelstrasse 54-58**
**D-5630 Remscheid 14 (DE)**

(72) Erfinder: **Klüting, Bernd, Ing.grad.**
**Jung-Stillingweg 18**
**D-5608 Radevormwald (DE)**
Erfinder: **Strowik, Willibald**
**Albert-Schmidt-Allee 42**
**D-5630 Remscheid-Lennep (DE)**
Erfinder: **Ebeling, Peter, Ing. grad.**
**Blumentalstrasse 51**
**D-5630 Remscheid (DE)**

(74) Vertreter: **Patentanwälte Phys. Bartels Dipl.-Ing.**
**Fink Dr.-Ing. Held**
**Lange Strasse 51**
**D-7000 Stuttgart 1 (DE)**

EP 0 096 803 B1

Courier Press, Leamington Spa, England.

## Beschreibung

Die Erfindung betrifft eine Sitzschiene für Fahrzeugsitze, insbesondere Kraftfahrzeugsitze, welche die Merkmale des Oberbegriffs des Anspruches 1 aufweist.

Eine bekannte Sitzschiene dieser Art (GB-A-433 044) wird durch eine einstückige Profilschiene mit U-förmigem Querschnitt gebildet. Als Gleitschiene dienen die nach außen abgewinkelten Endabschnitte der beiden Schenkel der Sitzschiene. Mit quer zur Längsrichtung der Sitzschiene verlaufender Drehachse ist im Gehäuse ein Ritzel angeordnet, das mit einer Zahnstange kämmt, welche fest mit der dem Ritzel zugekehrten Unterseite der Führungsschiene verbunden ist.

Bei einer wesentlich jüngeren, bekannten Lösung (US-A-4331 313) sind die beiden Gleitschienen, die je in einer fest mit dem Fahrzeugboden zu verbindenden Führungsschiene längsverschiebbar geführt sind, seitliche an einem Trägerrahmen angeordnet, mit dem über schwenkhebel höhenverstellbar zwei den Sitz tragende Trägerschienen verbunden sind. Auf der einen Seite des Trägerrahmens ist ferner ein Getriebegehäuse angeordnet, das die für den Antrieb der Schwenkhebel sowie für die Längsverstellung des Sitzes erforderlichen Getriebeteile enthält und an welches der Antriebsmotor angeflanscht ist. Dieses Getriebegehäuse besteht aus zwei Halbschalen, bei denen es sich um einstückig ausgebildete Blechteile handelt, die längs ihres Randes miteinander verbunden sind.

Der Erfindung liegt die Aufgabe zugrunde, eine Sitzschiene zu schaffen, die es ermöglicht, bei minimalem Raumbedarf alle Getriebeelemte zu integrieren, welche für eine Sitzverstellung notwendig sind, und zwar auch Getriebeelemente mit relativ großen Abmessungen.

Diese Aufgabe löst eine Sitzschiene mit den Merkmalen des Anspruches 1.

Dadurch, daß das von der Sitzschiene gebildete Gehäuse aus zwei zu einem Hohlkasten vereinigten Halbschalen besteht, kann sowohl die Profilform der Sitzschiene optimal an die Erfordernisse angepaßt als auch die Wandstärke auf das erforderliche Minimum reduziert werden. Beide Maßnahmen tragen zu einem minimalen Raumbedarf bei. Durch die Verwendung von zwei Halbschalen, die beide einstückig ausgebildete Blechteile sind, ist es dabei möglich, mit relativ geringen Kosten diese Halbschalen herzustellen, und zwar auch dann, wenn die Sitzschiene eine relativ komplizierte, mit Walzstahl-Profilschienen nicht realisierbare Geometrie hat. In vielen Fällen wird es möglich sein, die beiden Halbschalen symmetrisch zu gestalten.

Im Hinblick auf die Fertigungskosten ist es vorteilhaft, die beiden Halbschalen längs ihres oberen Randes miteinander zu verbinden, beispielsweise durch Punktschweißen.

Das durch die Halbschalen gebildete Gehäuse kann ohne Schwierigkeiten so große Abmessungen haben, daß in ihm wenigstens ein Schwenkhebel mit Zahnsegment einer Sitzhöhen- oder Sitzneigungsverstellvorrichtung um eine quer zur Schienenlängsrichtung verlaufende Achse drehbar angeordnet sein kann.

Für eine Sitzlängsverstelleinrichtung kann ein im Gehäuse angeordnetes Zahnrad zwischen zwei Zahnkränzen für den Eingriff in zwei von der Führungsschiene her zwischen die beiden Halbschalen eindringenden Zahnstangen einen dritten, vorzugsweise im Durchmesser größeren Zahnkranz aufweisen, der mit einer ebenfalls im Inneren der Schiene drehbar gelagerten Schnecke in Eingriff steht. Man erhält hierdurch eine sehr einfache und dennoch hochbelastbare Sitzlängsverstellvorrichtung, die auch die Feststellvorrichtung bilden kann, wenn das zusammen mit der Schnecke gebildete Winkelgetriebe selbsthemmend ist.

Bei einer bevorzugten Ausführungsform sind alle Zahnräder und/oder Schwenkhebel aller vorhandenen Sitzverstellvorrichtungen drehbar im Inneren der Sitzschiene gelagert. An den Seitenwänden der Sitzschiene sind dann Öffnungen vorhanden, von denen zumindest ein Teil der Lagerung der quer zur Holmlängsrichtung liegenden Achsen dient.

Vorzugsweise weist die Sitzschiene seitlich vorspringende Flächenbereiche zur örtlichen Verbreiterung ihres Innenraums und/oder eingezogene Bereiche der Seitenflächen zur örtlichen Verringerung der Innenraumbreite auf. Dies trägt ebenfalls zur Reduzierung des Raumbedarfs auf ein Minimum bei.

Im folgenden ist die Erfindung anhand von drei in der Zeichnung dargestellten Ausführungsbeispielen im einzelnen erläutert.

Es zeigen:
Fig. 1 einen Längsschnitt eines ersten Ausführungsbeispiels,
Fig. 2 eine Draufsicht auf das erste Ausführungsbeispiel,
Fig. 3 einen Querschnitt durch das erste Ausführungsbeispiel an der durch die Linie III-III der Fig. 1 gekennzeichneten Stelle,
Fig. 4 einen Querschnitt durch das erste Ausführungsbeispiel an der durch die Linie IV-IV in Fig. 1 gekennzeichneten Stelle,
Fig. 5 eine Draufsicht auf ein zweites Ausführungsbeispiel,
Fig. 6 eine Seitenansicht eines dritten Ausführungsbeispiels,
Fig. 7 einen Schnitt nach der Linie VII-VII der Fig. 6.

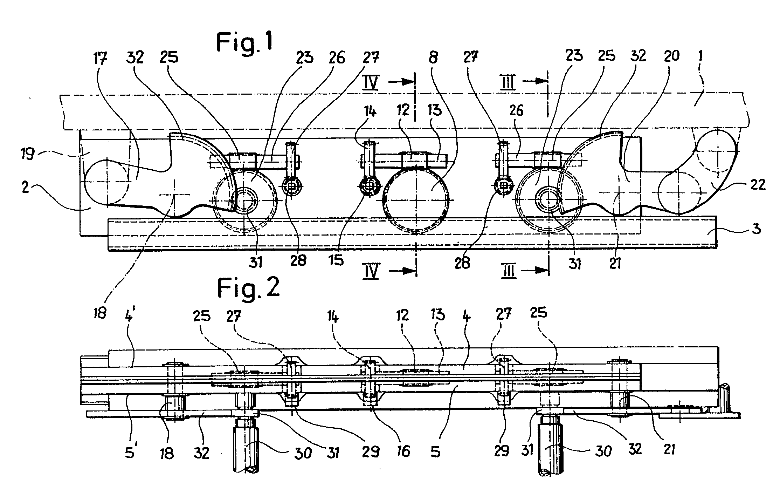

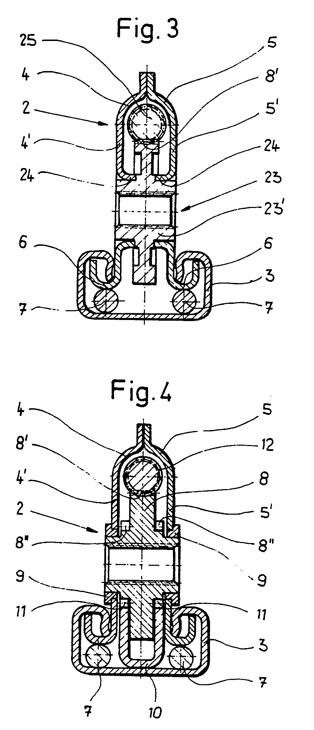

Ein Kraftfahrzeugsitz, von dem in Fig. 1 nur der eine Längsholm 1 eines rahmenförmigen Sitzgestells d argestellt ist, wird von zwei Sitzschienen 2 getragen, die spiegelbildlich gleich ausgebildet sind, weshalb im folgenden nur die eine der beiden beschrieben und auch in der Zeichnung nur die beschriebene Sitzschiene dargestellt ist. Die beiden parallel zueinander verlaufenden Sitzschienen 2 sind im eingebauten Zustand des Sitzes in Eingriff mit je einer Führungsschiene 3, welche unmittelbar oder über Konsolen fest mit dem Fahrzeugboden verbunden sind. Diese beiden gleich ausgebildeten Führungsschienen 3 haben, wie die Fig. 3 und 4 zeigen, ein übliches Querschnittsprofil, das sich von einem U-Profil dadurch unterscheidet, daß die beiden nach oben weisenden Schenkel nach innen und unten abgewinkelt sind und durch je eine zum Jochteil der Führungsschiene hin offene U-Schiene bilden.

Wie insbesondere die Fig. 3 und 4 zeigen, ist die Sitzschiene 2 als ein zur Führungsschiene 3 hin offenes Gehäuse ausgebildet, das aus zwei spiegelbildlich gleichen Halbschalen 4 und 5 zusammengesetzt ist. Diese beiden aus Blech geformten, profilschienenartigen Halbschalen 4 und 5 liegen längs ihres oberen, flanschartigen Randes aneinander an und sind hier, beispielsweise durch Punktschweißen, fest miteinander verbunden. Abgesehen von diesem flanschartigen Rand geben die beiden Halbschalen 4 und 5 der Sitzschiene 2 ein U-artiges Querschnittsprofil mit parallel zueinanderliegenden Seitenwänden. Dabei ist der Abstand dieser beiden Seitenwände 4' und 5' voneinander so gewählt, daß die Sitzschiene 2 ohne wesentliches Spiel in den Längsschlitz eingreifen kann, welchen die Führungsschiene 3 mit ihren beiden U-Schienen bildet.

Der untere Rand der beiden Halbschalen 4 und 5 ist, wie die Fig. 3 und 4 zeigen, nach außen und oben zur Bildung je einer U-Profilschiene abgebogen. Diese beiden U-Profilschienen bilden zusammen eine Gleitschiene 6. Diese Gleitschiene 6 unterscheidet sich von den bekannten Gleitschienen, welche zusammen mit Führungsschienen, deren Querschnittsprofil gleich demjenigen der Führungsschiene 3 ist, verwendet werden, nur dadurch, daß sie kein separates Bauteil sind, sondern einstückig mit der Sitzschiene ausgebildet, also in diese integriert sind. Die Gleitschiene 6 greift daher in bekannter Weise mit ihren U-Profilschienen in die nach unten offenen U-Schienen der Führungsschiene 3 ein und liegt auf Gleitkörpern 7 auf, welche in die Führungsschiene 3 eingelegt sind und aus einem Kunststoff mit guten Gleiteigenschaften bestehen.

Zur Sitzlängsverstellung ist etwa auf halber Länge der Sitzschiene 2 in dieser ein Zahnrad 8 mit horizontal und quer zur Längsrichtung der Sitzschiene 2 verlaufender Drehachse angeordnet. Wie Fig. 4 zeigt, sind aus den beiden Seitenwänden 4' und 5' konzentrisch zur Drehachse des Zahnrades 8 liegende Öffnungen ausgestanzt, in welche je eine Lagerbuchse 9 eingesetzt ist. In diesen beiden Lagerbuchsen 9 ist mit geringem axialem Spiel das Zahnrad 8 gelagert, das außer einem Zahnkranz 8' mit großem Durchmesser zu beiden Seiten dieses Zahnkranzes je einen Zahnkranz 8'' mit kleinerem.

Durchmesser aufweist. Der Zahnkranz 8'' greift, wie Fig. 4 zeigt, zwischen die beiden parallelen Schenkel einer U-Schiene 10 ein, die mit ihrem Jochteil am Joch der Führungsschiene 3 anliegt und hier fest mit der Führungsschiene 3 verbunden ist. Die beiden symmetrisch zur Mittelebene der Führungsschiene 3 liegenden, gleich langen Schenkel der U-Schiene 10 bilden längs ihres nach oben weisenden, freien Randes je eine Zahnstange 11. Mit diesen beiden Zahnstangen 11 kämmen die beiden im Durchmesser gleichen Zahnkränze 8'', weshalb eine Drehung des Zahnrades 8 zu einer Längsverschiebung der Sitzschiene 2 relativ zur Führungsschiene 3 führt. Um einerseits das Zahnrad 8 drehen und andererseits es in jeder beliebigen Drehstellung blockieren zu können, um eine ungewollte Längsverstellung des Sitzes zu verhindern, ist der Zahnkranz 8' in Eingriff mit einer Schnecke 12, welche mit in Längsrichtung der Sitzschiene 2 verlaufender Welle 13 oberhalb des Zahnrades 8 in der Sitzschiene 2 angeordnet ist. Nicht dargestellte, in die Sitzschiene 2 eingelegte und mit dieser fest verbundene Lagerkörper dienen der drehbaren, aber axial unverschiebbaren Lagerung der Welle 13. Wie die Fig. 1 und 2 zeigen, sitzt auf der Welle 13 ein Schneckenrad 14, unterhalb dessen eine mit ihm kämmende Schnecke 15 in der Führungsschiene 3 angeordnet ist. Um den Durchmesser des Schneckenrades 14 nicht auf die relativ geringe Breite der Führungsschiene 3 begrenzen zu müssen, sind, wie Fig. 2 zeigt, die beiden Seitenwände 4' und 5' im Bereich des Schneckenrades 14 ausgewölbt. Diese Auswölbungen können ebenso wie die Ausstanzungen beim Pressen der beiden Halbschalen 4 und 5 erzeugt werden, so daß sie die Fertigungskosten nicht erhöhen. Die axiale Länge der Schnecke 15 ist an den Abstand der Seitenwände 4' und 5' voneinander angepaßt, weshalb es zur Lagerung dieser Schnecke genügt, für ihre Wellenstummel Lageröffnungen in den beiden Seitenwänden 4' und 5' vorzusehen. Der eine Wellenstummel 16 dient dem Anschluß einer Verbindungswelle zum entsprechenden Anschluß an der anderen Sitzschiene und auch dem Anschluß eines Antriebsmittels, bei dem es sich um einen Antriebsmotor oder um einen Handantrieb handeln kann. Selbstverständlich wäre es, beispielsweise für das Anbringen eines Handrades, möglich, auch den anderen Wellenstummel so auszubilden, daß an ihm ein Anschluß eines Antriebsmittels möglich ist.

In die erfindungsgemäße Sitzschiene 2 ist nicht nur die Sitzlängsverstelleinrichtung integriert, sondern auch eine Sitzhöhen- und Neigungsverstelleinrichtung. Für die Höhen- und Neigungsverstellung des Sitzes ist jeder der beiden Längsholme 1 im Bereich seines vorderen Endes mit dem einen Ende eines Schwenkhebels 17 schwenkbar verbunden, wobei sowohl die Schwenkachse 18 des Schwenkhebels 17 als auch die Achse der gelenkigen Verbindung zwischen ihm und dem Längsholm 1 parallel zueinander und in Querrichtung des Sitzes verlaufen. Wie Fig. 1 zeigt, ist im Ausführungsbeispiel der Schwenkhebel 17 nicht unmittelbar an den Längsholm 1 angelenkt, sondern an eine sich von diesem aus nach unten erstreckende, mit dem Längsholm 1 starr verbundene Lasche 19. Die Schwenkachse 18, welche die Sitzschiene 2 durchdringt, ist mit dieser fest verbunden. Damit die Führungsschiene 3, welche breiter ist als die Sitzschiene 2, nicht im Schwenkbereich des Schwenkhebels 17 liegt, steht, wie Fig. 2 zeigt, die Schwenkachse 18 innen so weit über die Sitzschiene 2 über, daß der auf ihr drehbar, aber axial unverschiebbar gelagerte Schwenkhebel 17 an der Führungsschiene 3 vorbeibewegt werden kann.

Ein zweiter Schwenkhebel 20, der im wesentlichen wie der erste Schwenkhebel 17 ausgebildet ist, ist nahe dem hinteren Ende der Sitzschiene 2 drehbar, aber axial unverschiebbar auf einer Schwenkachse 21 gelagert, welche wie die Schwenkachse 18 den Schwenkhebel 20 in ausreichendem Abstand von der Sitzschiene 2 hält und diese durchdringt sowie fest mit ihr verbunden ist.

Der nach hinten weisende Arm des zweiten Schwenkhebels 20 ist schwenkbar mit einer Verbindungslasche 22 verbunden, die andererseits am Längsholm 1, und zwar im Ausführungsbeispiel an einer von diesem nach unten abstehenden Lasche, angelenkt ist. Die Achsen beider gelenkigen Verbindungen liegen ebenso wie die Schwenkachse 21 horizontal und quer zur Längsrichtung der Sitzschiene 2.

Durch eine Schwenkbewegung des ersten Schwenkhebels 17 im Uhrzeigersinn bei einer Blickrichtung gemäß Fig. 1 hebt dessen nach vorne weisender Arm den Längsholm 1 vorne an, wodurch die Neigungslage des Sitzes verändert wird. Entsprechend führt eine Schwenkbewegung des zweiten Schwenkhebels 20 entgegen dem Uhrzeigersinn bei einer Blickrichtung gemäß Fig. 1 zu einem Anheben des Längsholmes 1 in seinem hinteren Bereich. Durch ein gleichzeitiges oder nacheinander erfolgendes Schwenken der beiden Schwenkhebel 17 und 20 im genannten Schwenksinne wird die Sitzhöhe verstellt und, bei unterschiedlicher Verstellgröße vorne und hinten, auch die Sitzneigung.

Die beiden Schwenkhebel 17 und 20 weisen gleich ausgebildete Schwenkantriebe auf. Im Inneren der Sitzschiene 2 ist, wie Fig. 3 zeigt, je ein Zahnrad 23 mit parallel zur Schwenkachse 18 bzw. 21 liegender Drehachse angeordnet. Für die Lagerung dieser beiden Zahnräder 23 sind die Seitenwände 4' und 5' mit Ausstanzungen versehen, die je von einem ringförmigen, in das Innere der Sitzschiene 2 ragenden Kragen begrenzt sind. Diese Kragen 24 dienen als Lager für die Nabe 23' der beiden Zahnräder 23, wie Fig. 3 zeigt, und sichern außerdem die Zahnräder 23 gegen eine axiale Verschiebung. Wie bei dem Zahnrad 8 ist über den Zahnrädern 23 je eine Schnecke 25 im Inneren der Sitzschiene 2 mit in Längsrichtung der Sitzschiene verlaufender Drehachse angeordnet und mittels nicht dargestellter, in die Sitzschiene 2 eingesetzter Lagerkörper gelagert. Eine Welle 26 trägt nicht nur die in Eingriff mit dem Zahnrad 23 stehende Schnecke 25, sondern auch ein Schneckenrad 27. Für diese beiden Schneckenräder 27 ist wie für das Schneckenrad 14 in den Seitenwänden 4' und 5' je eine Auswölbung vorgesehen, um den Durchmesser der Schneckenräder 27 größer als den Abstand der beiden Seitenwände voneinander in den übrigen Bereichen wählen zu können. Der Antrieb der beiden Schneckenräder 27 erfolgt wie derjenige des Schneckenrades 14 mittels je einer Schnecke 28, welche unterhalb des Schneckenrades mit quer zur Sitzschiene 2 liegender Drehachse in der Sitzschiene 2 drehbar gelagert sind und deren aus der Sitzschiene herausgeführte Wellenstummel 29 dem Anschluß einer Antriebseinrichtung dienen.

In die Nabe 23' beider Zahnräder 23 ist je eine Welle 30 drehfest und axial unverschiebbar eingesetzt, welche zur anderen Sitzschiene führt und dort in gleicher Weise mit dem entsprechenden Zahnrad 23 gekuppelt ist, damit ein Gleichlauf der Verstellvorrichtungen der einen Seite mit denjenigen der anderen Seite gewährleistet ist. Auf jeder der beiden Wellen 30 sitzen drehfest Antriebsritzel 31, die je mit einem Zahnkranz 32 des zugeordneten Schwenkhebels 17 bzw. 20 kämmen. Der Zahnkranz 32 ist an demjenigen Arm des Schwenkhebels konzentrisch zu dessen Schwenkachse angeordnet, der nicht mit dem Längsholm 1 oder der Verbindungslasche 22 schwenkbar verbunden ist.

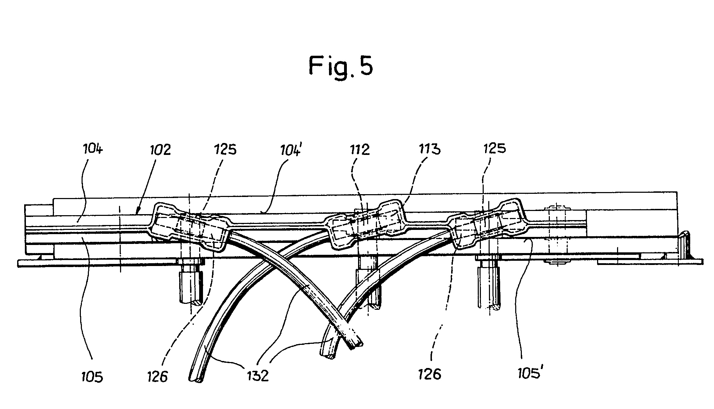

Das in Fig. 5 dargestellte zweite Ausführungsbeispiel unterscheidet sich von dem vorstehend beschriebenen Ausführungsbeispiel nur durch eine etwas andere Ausgestaltung der Antriebseinrichtungen. Daher sind sich entsprechende Teile mit um 100 größeren Bezugszahlen gekennzeichnet und die Erläuterungen auf die abweichende Ausgestaltung beschränkt. Im übrigen wird auf die Ausführungen zum ersten Ausführungsbeispiel Bezug genommen. Die Drehachse der Schnecken 112 und 125, welche in Eingriff mit dem der Sitzlängsverstellung dienenden Zahnrad bzw. den der Höhen- und Neigungsverstellung dienenden Zahnrädern stehen, verlaufen, wie Fig. 5 zeigt, nicht in Längsrichtung der Sitzschiene 102, sondern schließen mit deren Längsrichtung einen spitzen Winkel ein. Dabei entspricht die Größe dieses Winkels dem Steigungswinkel der Schnecke. Wie Fig. 5 zeigt, ermöglicht diese verschwenkte Anordnung der Schnecken 112 und 125 in der Sitzschiene 102 den unmittelbaren Anschluß je einer biegsamen Welle 132 an die Schneckenwellen 113 bzw. 126, wodurch der Aufwand für die Antriebe geringer gehalten wird.

Zwar macht der schräge Einbau der Schnecken 112 und 125 es erforderlich, die Seitenwände 104' und 105' der Sitzschiene 102 mit örtlichen Auswölbungen sowie einer Öffnung für den Zugang zu den Schneckenwellen zu versehen. Der zusätzliche Aufwand hierfür fällt jedoch nicht nennenswert ins Gewicht, weil die zur Bildung der Auswölbungen erforderlichen, örtlichen Verformungen des Bleches beim Pressen der Halbschalen 104 und 105 hergestellt werden können.

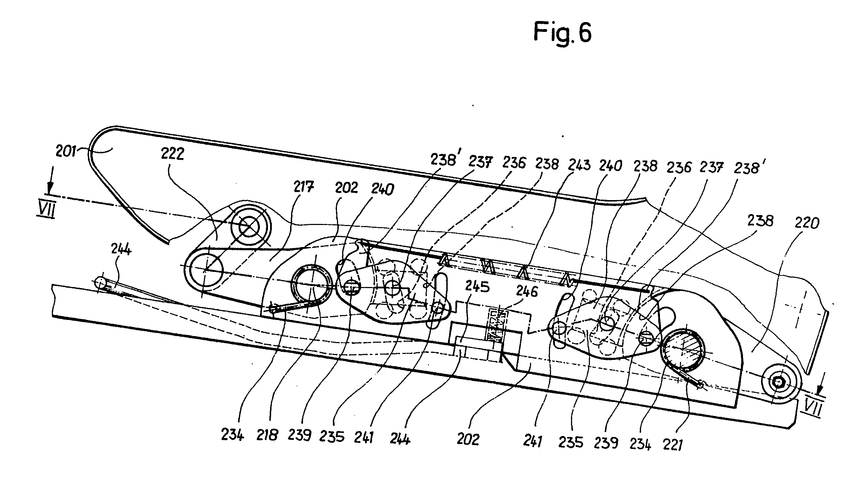

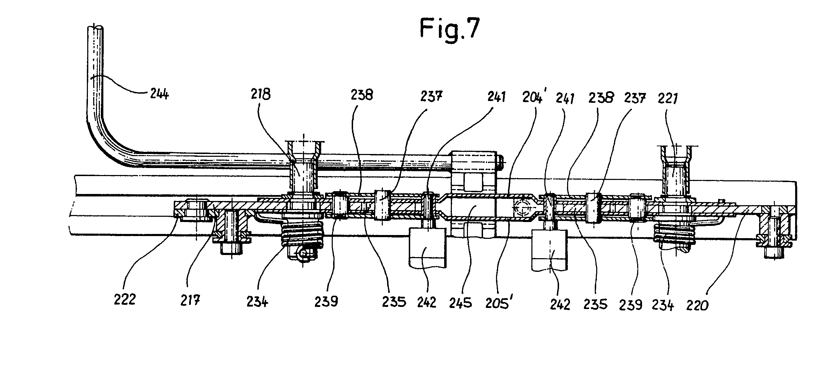

Bei dem in den Fig. 6 und 7 dargestellten, dritten Ausführungsbeispiel ist die Sitzschiene 202 im Prinzip wie bei den zuvor beschriebenen Ausführungsbeispielen ausgebildet, d.h., sie bildet ein nach unten hin offenes Gehäuse, das aus zwei Halbschalen zusammengesetzt ist, die längs ihres oberen Randes miteinander verbunden sind. Der untere Rand der von den beiden Halbschalen gebildeten Seitenwände 204' und 205' der Sitzschiene 202 bildet eine Gleitschiene für den Eingriff in eine Führungsschiene der zuvor beschriebenen Art.

Abweichend von den beiden zuvor beschriebenen Ausführungsbeispielen ist die Sitzschiene 202 im Bereich ihres vorderen und hinteren Endes nach oben offen, weil hier zwischen den beiden Seitenwänden je ein Schwenkhebel 217 bzw. 220 angeordnet ist, der drehfest auf einer die Sitzschiene 202 durchdringenden und in ihr schwenkbar gelagerten Welle 218 bzw. 221 sitzt. Der aus dem vorderen Ende herausragende Arm des Schwenkhebels 217 ist an eine Verbindungslasche 222 angelenkt, die andererseits am Längsholm 201 eines Sitzgestells angelenkt ist. Der nach hinten aus der Sitzschiene 202 herausragende Arm des Schwenkhebels 220 ist unmittelbar am Längsholm 201 angelenkt, wobei die Achsen sämtlicher Gelenkverbindungen parallel zueinander und in Sitzquerrichtung verlaufen. Selbstverständlich könnte wie bei den zuvor beschriebenen Ausführungsbeispielen die Verbindungslasche auch dem hinteren Schwenkhebel zugeordnet sein, wie umgekehrt bei den Ausführungsbeispielen gemäß den Fig. 1 bis 5 die Verbindungslasche auch der Verbindung zwischen dem vorderen Schwenkhebel und dem Längsholm dienen könnte.

Sowohl um die Welle 218 als auch die Welle 221 ist je eine vorgespannte Schraubenfeder 234 gelegt, deren eines Ende an der sie tragenden Welle festgelegt ist und deren anderes Ende einen den zugeordneten Schwenkhebel 217 bzw. 220 untergreifenden Arm bildet. Die Schraubenfedern 234 üben deshalb auf die zugeordneten Schwenkhebel 217 und 220 je ein Drehmoment im Sinne einer Vergrößerung der Sitzhöhe aus, das so groß gewählt ist, daß der Sitz bei verminderter Belastung sich nach oben bewegen kann.

Den beiden Schwenkhebeln 217 und 220 braucht deshalb nur je eine Sperrvorrichtung zugeordnet zu sein, welche sie in den unterschiedlichen Schwenkstellungen zu verriegeln vermag. Diese gleich ausgebildeten Sperrvorrichtungen weisen je einen im Inneren der Sitzschiene angeordneten,gegen die Schwenkachse des zugeordneten Schwenkhebels 217 bzw. 220 translatorisch verschiebbar geführten Sperrschieber 235 auf, bei denen es sich wie bei den beiden Schwenkhebeln 217 und 220 und auch den Schwenkhebeln der zuvor beschriebenen Ausführungsbeispiele um plattenförmige Stanzteile handelt. Die sperrschieber 235 tragen längs ihres dem Schwenkhebel zugekehrten Randes eine Verzahnung, die in Eingriff mit der Verzahnung treten kann, welche konzentrisch zur Hebelschwenkachse am freien Ende desjenigen Armes des Schwenkhebels vorgesehen ist, der nicht mit der Verbindungslasche bzw. dem Sitzgestell gelenkig verbunden ist.

Die Längsverschiebung der Sperrschieber 235 erfolgt mit Hilfe von Kulissen 236, in welche je ein jeden Sperrschieber 235 durchdringender Führungszapfen 237 eingreift. Da diese Führungszapfen 237 auch die Seitenwände 204' und 205' durchdringen, weisen diese die für die Verschiebbarkeit der Führungszapfen erforderlichen schlitzförmigen Ausnehmungen auf. Die Kulissen 236 sind in je zwei Kulissenplatten 238 vorgesehen, welche zu beiden Seiten der Sitzschiene 202 im Bereich der Sperrschieber 235 angeordnet sind. Jedes Kulissenplattenpaar ist schwenkbar auf einem die Sitzschiene 202 durchdringenden Lagerzapfen 239 gelagert. Da sich diese Lagerzapfen 239 im Bereich des zugeordneten Schwenkhebels 217 bzw. 220 befinden, sind diese für den Durchtritt des Lagerzapfens mit einem bogenförmigen Schlitz 240 versehen. An dem dem anderen Kulissenplattenpaar zugekehrten Endbereich sind die beiden zusammengehörigen Kulissenplatten durch einen Bolzen 241 miteinander verbunden, der je einen bogenförmigen Schlitz der Seitenwände 204' und 205' durchdringt. Die beiden Bolzen 241 tragen je einen Handgriff 242.

Wird der vordere Handgriff 242 nach oben bewegt, dann schwenkt das zugehörige Kulissenplattenpaar entgegen dem Uhrzeigersinn bei einer Blickrichtung gemäß Fig. 1, wodurch der dem Schwenkhebel 217 zugeordnete sperrschiber 235 nach hinten bewegt und dabei unwirksam gemacht wird. Nun kann der Sitz vorne angehoben oder abgesenkt werden. Entsprechend ermöglicht eine Bewegung des hinteren Handgriffes 242 nach oben eine Schwenkbewegung im Uhrzeigersinn bei einer Blickrichtung gemäß Fig. 6 des zugeordneten Kulissenplattenpaares, wodurch der dem Schwenkhebel 220 zugeordnete Sperrschieber 235 unwirksam gemacht wird.

Um die Sperrschieber 235 aus der Freigabestellung in die Sperrstellung zurückzuführen und in dieser zu halten, haben die Kulissenplatten 238 einen sich nach oben erstreckenden Arm 238'. In diese Arme sind vorgespannte Rückstellfedern 243 eingehängt.

Die Sitzlängsverstellung erfolgt bei diesem Ausführungsbeispiel ebenfalls nicht mittels eines Motorantriebs, obwohl selbstverständlich ein solcher vorgesehen sein könnte. Daher ist nur eine Verriegelungseinrichtung vorgesehen, die einen neben der Sitzschiene 202 angeordneten und um seine Längsachse drehbaren Stab 244 aufweist, dessen vorderes, abgewinkeltes Ende einen nicht dargestellten Handgriff trägt. Am hinteren Endabschnitt des Stabes 244 ist ein Verriegelungsglied 245 festgelegt, das rechtwinklig vom Stab 245 absteht, Ausnehmungen in den Seitenwänden 204' und 205' der Sitzschiene durchgreift und auf seiner Unterseite Zähne oder andere Rastelemente trägt, welche mit den Zähnen einer Zahnstange oder mit den Rastelementen einer anders ausgebildeten Rastenschiene formschlüssig in Eingriff treten können. Vorzugsweise ist im Inneren der Sitzschiene eine vorgespannte Rückstellfeder 246 angeordnet, welche das Verriegelungsglied gegen die Zahnstange oder Rastenschiene drückt

**Patentansprüche**

1. Sitzschiene (2) für Fahrzeugsitze, insbesondere Kraftfahrzeugsitze, die als Gehäuse ausgebildet ist, in dem wenigstens ein Getriebeteil einer Sitzverstellvorrichtung angeordnet ist und an das eine dem längsverschiebbaren Eingriff in eine Führungsschiene (3) dienende Gleitschiene (6) angeformt ist, dadurch gekennzeichnet, daß das Gehäuse aus zwei zu einem Hohlkasten vereinigten Halbschalen (4, 5; 104, 105) besteht, deren unterer Rand je zur Hälfte die Gleitschiene (6) bildet, und daß die beiden Halbschalen (4, 5; 104, 105) einstückig ausgebildete Blechteile sind.

2. Sitzschiene nach Anspruch 1, dadurch gekennzeichnet, daß die beiden Halbschalen (4, 5, 104, 105) längs ihres oberen Randes aneinander anliegen und miteinander verbunden sind.

3. Sitzschiene nach Ansprüch 1 oder 2 dadurch gekennzeichnet, daß in dem durch die Halbschalen (4, 5; 104, 105) gebildeten Gehäuse wenigstens ein zahnrad (8, 23; 108, 123) und/oder wenigstens ein Schwenkhebel (217, 220) mit Zahnsegment einer Sitzlängsverstellvorrichtung, einer Sitzhöhenverstellvorrichtung oder einer Sitzneigungsverstellvorrichtung drehbar gelagert sind und daß in den Seitenwänden (4', 5'; 104', 105'; 204', 205') der Sitzschiene (2; 102; 202) Öffnungen vorhanden sind, von denen zumindest ein Teil der Lagerung von quer zur Schienenlängsrichtung liegender Achsen (16, 18, 21, 29) dient.

4. Sitzschiene nach Anspruch 3, dadurch gekennzeichnet, daß das Zahnrad (8) der Sitzlängsverstellvorrichtung zwischen zwei Zahnkränzen (8'') für den Eingriff in zwei von der Führungsschiene (3) her zwischen die beiden Halbschalen (4, 5) eindringenden Zahnstangen (11) einen dritten, vorzugsweise im Durchmesser größeren Zahnkranz (8') aufweist, der mit einem ebenfalls im Inneren der Sitzschiene (2) drehbar gelagerten Antriebszahnrad (12) in Eingriff steht, das vorzugsweise als Schnecke ausgebildet ist.

5. Sitzschiene nach einem der Ansprüche 1 bis 4, gekennzeichnet durch seitlich vorspringende Flächenbereiche zur örtlichen Verbreiterung der Sitzschiene.

6. Sitzschiene nach Anspruch 5, dadurch gekennzeichnet, daß im Bereich einer örtlichen Verbreiterung der Sitzschiene (102) wenigstens ein Zahnrad (112, 125) angeordnet ist, dessen Drehachse einen spitzen Winkel mit der Längsachse der Sitzschiene (102) aufweist, welche in ihrer Seitenwand (104', 105') der eine auf das eine Ende der dieses Zahnrad tragenden Welle ausgerichtete Öffnung für eine Wellendurchführung hat.

7. Sitzschiene nach einem der Ansprüche 1 bis 6, dadurch gekennzeichnet, daß einem teilweise in ihrem Inneren liegenden und in ihr schwenkbar gelagerten Schwenkhebel (217, 220) ein Sperrelement (235) zugeordnet ist, das im Inneren der Sitzschiene (202) bewegbar gelagert ist und in seiner Sperrstellung in formschlüssigem Eingriff mit dem zugeordneten Schwenkhebel steht.

**Revendications**

1. Patin de siège (2) pour sièges de véhicules, notamment pour sièges de véhicules automobiles, qui est constitué par un boîtier dans lequel est agencé au moins un élément de mécanisme d'un dispositif de réglage du siège et sur lequel est formée une semelle (6) qui sert à le mettre en prise mobile en translation longitudinale dans une glissière (3), caractérisé en ce que le boîtier est composé de deux demi-coquilles (4, 5; 104, 105) réunies en une boîte creuse, dont les bords inférieurs forment chacun une moitié de la semelle (6) et en ce que les deux demi-coquilles (4, 5; 104, 105) sont des pièces de tôle réalisée chacune en une seule pièce.

2. Patin de siège selon la revendication 1, caractérisé en ce que les deux demi-coquilles (4, 5; 104, 105) sont appliquées l'une contre l'autre et assemblées l'une à l'autre le long de leur bord supérieur.

3. Patin de siège selon la revendication 1 ou 2, caractérisé en ce que, dans le boîtier formé par les demi-coquilles (4, 5; 104, 105) sont montés tourillonnants au moins une roue dentée (8, 23; 108, 123) et/ou au moins un levier oscillant (217, 220) muni d'un secteur denté, appartenant à un dispositif de réglage longitudinal du siège, à un dispositif de réglage en hauteur du siège ou à un dispositif de réglage de l'inclinaison du siège et en ce que, dans les parois latérales (4', 5', 104', 105', 204', 205') du patin de siège (2; 102; 202), sont prévues des ouvertures dont au moins une partie sert au montage d'axes (16, 18, 21, 29) orientés transversalement à la direction longitudinale du patin.

4. Patin de siège selon la revendication 3, caractérisé en ce que la roue dentée (8) du dispositif de réglage longitudinal du siège présente, entre deux couronnes dentées (8'') destinées à entrer en prise avec deux crémaillères (11) qui font saillie sur la glissière (3) et sont engagées entre les deux demi-coquilles (4, 5), une troisième couronne dentée (8'), de préférence de plus grand diamètre, qui est en prise avec une roue dentée d'entraînement (12), qui est elle aussi montée tourillonnante dans le volume intérieur du patin de siège (2), et qui est de préférence constituée par une vis.

5. Patin de siège selon une des revendications 1 à 4, caractérisé par des régions des faces qui font saillie latéralement, pour élargir localement le patin de siège.

6. Patin de siège selon la revendication 5, caractérisé en ce que, dans la région d'un élargissement local du patin de siège (102) est agencée au moins une roue dentée (112, 125) dont l'axe de rotation forme un angle aigu avec l'axe longitudinal du patin de siège (102), lequel présente, dans sa paroi latérale (104', 105'), une ouverture dirigée vers une extrémité de l'arbre qui porte cette roue dentée, pour servir de passage d'arbre.

7. Patin de siège selon une des revendications 1 à 6, caractérisé en ce qu'à un levier oscillant (217, 220) qui est situé partiellement à l'intérieur du patin de siège et est monté oscillant dans ce patin, est associé un élément de blocage (235) qui est monté mobile dans le volume intérieur du patin de siège (202) et est en prise par sûreté de forme avec le levier oscillant correspondant dans sa position de blocage.

## Claims

1. Seat rail (2) for vehicle seats, particularly motor vehicle seats, and which is constructed as a housing in which are disposed at least one part of the gearing of a seat adjusting device and on which there is swaged a slide rail (6) which serves for longitudinally displaceable engagement into a guide rail (3), characterised in that the housing consists of two half-shells (4, 5; 104, 105) which are combined to form a hollow box and the bottom edges of which each form half of the slide rail (6) and in that the two half-shells (4, 5; 104, 105) are sheet metal parts which are shaped in one piece.

2. Seat rail according to Claim 1, characterised in that the two half-shells (4, 5; 104, 105) bear on and are connected to each other along their top edge.

3. Seat rail according to Claim 1 or 2, characterised in that in the housing formed by the half-shells (4, 5; 104, 105) there are at least one gear wheel (8, 23; 108, 123) and/or at least one pivot lever (217, 220) with a toothed segment of a device for longitudinal adjustment of the seat, of a device for adjusting the seat height or of a device for adjusting the seat rake, all of which are rotatably mounted, and in that there are in the side walls (4', 5'; 104', 105'; 204', 205') of the seat rail (2, 102, 202) apertures of which at least a part serves for mounting spindles (16, 18, 21, 29) which are at right-angles to the longitudinal direction of the rail.

4. Seat rail according to Claim 3, characterised in that the gear wheel (8) of the device for longitudinal seat adjustment has between two ring gears (8'') for engagement into two racks (11) which penetrate between the two half-shells (4, 5) from the direction of the guide rail (3), a third and preferably larger diameter ring gear (8') which meshes with a driving gear wheel (12) which is preferably constructed as a worm and which is likewise rotatably mounted inside the seat rail (2).

5. Seat rail according to one of Claims 1 to 4, characterised by laterally projecting surface portions for localised widening of the seat rail.

6. Seat rail according to Claim 5, characterised in that in the area where there is a localised widening of the seat rail (102), there is at least one gear wheel (112, 125) the axis of rotation of which is at an acute angle to the longitudinal axis of the seat rail (102) which has in its side wall (104', 105') which is partially located and is pivotally mounted in the interior of the said rail a locking element (25) which is mounted to move in the interior of the seat rail (102) and which, when in its locked position, is in form-locking engagement with the associated pivot lever.

7. Seat rail according to one of Claims 1 to 6, characterised in that there is associated with a pivot lever (217, 220) located partially within and mounted to pivot within its interior a locking element (235) which is mounted to move in the interior of the seat rail (102) and which, when in its locked position, is in form-locking engagement with the associated pivot lever.

Fig.1

Fig.2

## Fig. 3

## Fig. 4

2

Fig. 5

Fig.6

Fig.7